# EUROPÄISCHE PATENTSCHRIFT

(11) **EP 3 285 909 B1**
(45) Veröffentlichungstag und Bekanntmachung des Hinweises auf die Patenterteilung: **02.03.2022**
(21) Anmeldenummer: 16716246.0
(22) Anmeldetag: 14.04.2016
(51) Int. Cl.: B01D 46/24

(54) **SEKUNDÄRELEMENT FÜR EIN FILTERSYSTEM SOWIE FILTERSYSTEM MIT EINEM SEKUNDÄRELEMENT**
SECONDARY ELEMENT FOR A FILTER SYSTEM AND FILTER SYSTEM WITH A SECONDARY ELEMENT
ÉLÉMENT SECONDAIRE POUR SYSTÈME FILTANT AINSI QUE SYSTÈME FILTRANT DOTÉ D'UN ÉLÉMENT SECONDAIRE

(30) Priorität: 20.04.2015 DE 102015004965
(43) Veröffentlichungstag der Anmeldung: 28.02.2018
(73) Patentinhaber: MANN+HUMMEL GmbH, 71636 Ludwigsburg (DE)
(72) Erfinder: NEEF, Pascal, 78647 Trossingen (DE); SCHULDT, Joachim, 67071 Ludwigshafen (DE); FRITZSCHING, Torsten, 71665 Vaihingen (DE); SHARMA, Mridul, 560094 Bangalore (IN); KUMARESAN, Prabhu, 627808 Tenkasi Taluk (IN)
(74) Vertreter: Mann + Hummel Intellectual Property
(86) Internationale Anmeldenummer: PCT/EP2016/058277
(87) Internationale Veröffentlichungsnummer: WO 2016/169838

(56) Entgegenhaltungen:
- WO-A2-2014/085769
- US-A1- 2009 100 813
- US-A1- 2012 067 017
- US-A1- 2014 174 296
- US-A1- 2014 325 945

## Beschreibung

### Technisches Gebiet

Die Erfindung betrifft ein Filtersystem und ein Verfahren zum Konfigurieren eines Sekundärelements zur Verwendung als Sekundärelement in einem solchen Luftfiltersystem.

### Stand der Technik

Es ist bekannt, Luftfilter einzusetzen, um Verbrennungsansaugluft für Brennkraftmaschinen bei Kraftfahrzeugen, z.B. Pkw, Nutzfahrzeugen, Arbeitsmaschinen, landwirtschaftlichen Fahrzeugen, aber auch stationären Generatoren und dergleichen, zu filtern. Solche Luftfilter umfassen im Allgemeinen ein Gehäuse, einen Lufteinlass und einen Luftauslass, wobei ein entfernbares und austauschbares Haupt-Filterelement in dem Gehäuse angeordnet ist. Das Gehäuse umfasst häufig eine Wartungs- oder Zugangsabdeckung für einen Zugang zu dem im Inneren aufgenommenen Filterelement im Wartungsfall. Hierzu kann das Filterelement demontiert werden und entweder durch ein fabrikneues Filterelement ersetzt, überholt und wieder eingesetzt werden, oder durch ein zuvor gebrauchtes, aber überholtes Filterelement ausgetauscht werden.

Üblicherweise werden die Filterelemente von Luftfiltern nach einer bestimmten Betriebszeit ausgetauscht. Je nach Staubanfall kann die Standzeit eines Luftfilters wenige Tage, etwa beim Einsatz in Baumaschinen, bis zu mehreren Monaten in weniger staubbelasteter Umgebung betragen.

Insbesondere bei einem häufigen Austausch von Filterelementen ist die zuverlässige und prozesssichere Abdichtung des Filterelements in einem Gehäuse wichtig. Die Abdichtung soll temperaturbeständig und rütteltest ausgeführt sein. Auch an Anlagen oder Einrichtungen, die starken Schwingungen oder Erschütterungen ausgesetzt sind, muss die Abdichtung des Filterelements gewährleistet sein. Gleichzeitig soll aber das Filterelement selbst möglichst keine metallischen Elemente aufweisen, damit es problemlos thermisch entsorgt werden kann.

Zum Schutz der Reinseite eines Luftführungssystems einer Brennkraftmaschine beim Austausch eines Filterelements vor eindringenden Schmutzpartikeln ist bei Luftfiltersystemen häufig ein sog. Sekundärelement vorhanden, welches beim Austausch im Filtersystem verbleibt. Das Sekundärelement sitzt üblicherweise auf der Reinseite des Filterelements, beispielsweise im Inneren eines Rundfilterelements und ist mit dem Gehäuse des Filtersystems verbunden. Das Sekundärelement weist selbst auch ein Filtermedium auf, das restliche Schmutzpartikel im Luftstrom vom Filterauslass fernhält. Das Sekundärelement kann selbst auch tauschbar sein, da es, allerdings in sehr viel größeren Zeitabständen, als das eigentliche Filterelement mit Staubpartikeln beladen sein kann. Aus der WO2017/085769 A1 ist ein Filtereinsatzarrangement bekannt, bei welchem Merkmale zur Verwendung eines Sekundärfilterelements angepasst sind. Aus der US 2012/067017 A1 ist eine Luftfilteranordnung mit einem auskragenden Stützkörper für ein darin angeordnetes Filterelement bekannt. Aus der US 2009/100813 A1 ist eine Luftfilteranordnung mit einem Sekundärfilterelement bekannt.

Aus der US 8,480,778 B2 ist ein Luftfiltersystem bekannt, bei dem ein Sekundärelement vorhanden ist, das aus einem Filtermedium in Hohlzylinderanordnung besteht, das an einem Ende mit einer Kappe verschlossen ist und am anderen Ende offen ist. Mit dem offenen Ende kann es über ein im Inneren des Filterelements und mit dem Filtergehäuse verbundenen Stützrohr gestülpt werden und so den Auslass des Filtersystems gegen eindringende Schmutzpartikel schützen. Über das auf dem Stützrohr angebrachte Sekundärelement wird dann das eigentliche Filterelement montiert, das auf dem freien Ende des Stützrohrs und damit auf der Kappe des Sekundärelements aufliegt. Ein weiterer Luftfilter ist aus der WO 2014/085769 A2 bekannt.

Eine Aufgabe der Erfindung ist es daher, ein Sekundärelement für ein Filtersystem zu schaffen, das bei einfacher und sicherer Montierbarkeit eine zuverlässige Abdichtung der Reinseite eines Luftführungssystems, insbesondere bei Austausch des Filterelements im Wartungsfall, gewährleistet.

Eine weitere Aufgabe der Erfindung ist es, ein Filtersystem zur Aufnahme eines solchen austauschbaren Sekundärelements zu schaffen, das eine zuverlässige Abdichtung der Reinseite eines Luftführungssystems, insbesondere bei Austausch des Filterelements im Wartungsfall, gewährleistet.

Die vorgenannten Aufgaben werden nach einem Aspekt der Erfindung gelöst von einem Luftfiltersystem nach Anspruch 1 und einem Verfahren nach Anspruch 7.

Günstige Ausgestaltungen und Vorteile der Erfindung ergeben sich aus den weiteren Ansprüchen, der Beschreibung und der Zeichnung.

### Offenbarung der Erfindung

Es wird ein Sekundärelement mit einer Längsachse und zwei sich gegenüberliegenden Enden vorgeschlagen, das ein um die Längsachse angeordnetes Filtermedium umfasst. Dabei ist eines der Enden offen und das gegenüberliegende Ende mit einer geschlossenen Endscheibe dicht abgeschlossen. Die Endscheibe weist ein Verbindungsmittel auf, das bei bestimmungsgemäßer Montage zum Zusammenwirken mit einem Verbindungsmittel eines Stützrohrs eines Filtersystems vorgesehen ist, um das Sekundärelement auf dem Stützrohr zu fixieren.

Vorteilhaft erfolgt bei montiertem Sekundärelement im Filtersystem eine reinseitige Abdichtung durch das Sekundärelement über dessen offenes Ende, das dicht an einem Gegenelement anliegt. Es ist keine weitere separate Dichtstelle notwendig, insbesondere ist eine weitere Dichtung durch Anschäumen oder dgl. nicht notwendig, da das Sekundärelement einseitig geschlossen ist. Durch die Fixierung an dem Stützrohr ist im Montagefall ferner eine eindeutige Endlage des Sekundärelements im Filtersystem gegeben.

Nach einer günstigen Ausgestaltung kann die Endscheibe mit dem Filtermedium fest verbunden sein, insbesondere verschweißt oder verklebt oder angespritzt oder angeschäumt sein. Es kann eine für den beabsichtigten Einsatzzweck geeignete Verbindungsart gewählt werden.

Erfindungsgemäß weist die Endscheibe eine Vertiefung auf, die in das Innere des Sekundärelements ragt. Der Boden der Vertiefung kann sich geeignet auf dem Stützrohr abstützen und gibt bei der Montage eine definierte Endlage des Sekundärelements vor.

Nach einer günstigen Ausgestaltung kann das Sekundärelement konisch ausgebildet sein und dessen Durchmesser sich vom offenen Ende zum geschlossenen Ende hin verjüngen. Dies erleichtert das Aufschieben des Sekundärelements auf das Stützrohr.

Nach einer günstigen Ausgestaltung kann das Filtermedium aus einem Vlies oder aus Papier oder Zellulose oder aus einer Mischfaser aus Kunststoff und Zellulose gebildet sein. Es kann ein für den beabsichtigten Einsatzzweck geeignetes Material gewählt werden.

Vorteilhaft kann das Filtermedium auf dem Umfang des Sekundärelements mit wenigstens einer Naht endlos ausgeführt sein. Dadurch können ebene Flächen von Filtermedien für die Herstellung des Sekundärelements verwendet werden, die auf einen entsprechenden Formkörper aufgezogen und mit einer Naht beispielsweise zu einer Endlosbahn verschweißt werden, wodurch die Dichtigkeit des Sekundärelements gegeben ist.

Erfindungsgemäß umfasst das Verbindungsmittel einen Teil einer Rastverbindung. So umfasst das Verbindungsmittel Rasthaken und ein stützrohrseitiges Gegenelement, an dem sich der oder die Rasthaken festhaken können.

In einer günstigen Ausgestaltung ragt das an der Endscheibe vorgesehene Verbindungsmittel von der Endscheibe axial in den Innenraum des Sekundärelements hinein.

Erfindungsgemäß weist die Endscheibe eine Vertiefung auf, die in das Innere des Sekundärelements ragt, und das Verbindungsmittel ragt von einem Boden der Vertiefung weiter in das Innere des Sekundärelements. Erfindungsgemäß ist die Vertiefung formkonform zu einer trichterförmigen Vertiefung des Stützrohrs ausgebildet. Vorteilhaft kann die Vertiefung trichterförmig ausgebildet sein. Dies erleichtert das Zusammenführen von Sekundärelement und Stützrohr.

Nach der Erfindung wird ein Filtersystem vorgeschlagen, umfassend ein Gehäuse, einen am Gehäuse angeordneten Einlassstutzen zum Zuführen eines zu filternden Fluids, insbesondere Luft, einen am Gehäuse angeordneten Auslassstutzen zur Ableitung des gefilterten Fluids, insbesondere ein in Längsrichtung zentral angeordneter Auslassstutzen, wenigstens ein Filterelement, das zwischen Einlassstutzen und Auslassstutzen angeordnet ist, ein im Inneren des Gehäuses entlang einer Gehäuseachse angeordnetes Stützrohr zur Aufnahme eines Filterelements, wobei das Stützrohr als Träger eines Sekundärelements vorgesehen ist, wobei das Sekundärelement und das Stützrohr jeweils zueinander komplementäre Verbindungmittel aufweisen, mit denen sie an einer ihrer Stirnseiten miteinander verbindbar sind.

Ein Vorteil eines solchen Filtersystems liegt dabei in der sicheren und stabilen Montage sowohl des primären Filterelements als auch des Sekundärelements sowie einer sehr wirtschaftlichen Austauschbarkeit des Filterelements und ggf. auch des Sekundärelements im Wartungsfall. Gerade bei niedrigen Standzeiten, wie sie im Land- und Baumaschineneinsatz auftreten können, ist die schnelle Austauschbarkeit von großer Bedeutung.

Vorteilhaft ist das Stützrohr gehäusefest angeordnet. Das Sekundärelement liegt auf dem Stützrohr sicher auf. Beim Wechsel des primären Filterelements schützt das Sekundärelement die Reinseite des Filterelements. Ein Wechsel des Sekundärelements kann erfolgen, ohne dass das Stützrohr entfernt werden muss, was die Kosten für das Sekundärelement senkt. Vorteilhaft erfolgt bei montiertem Sekundärelement im Filtersystem eine reinseitige Abdichtung durch das Sekundärelement über dessen offenes Ende, das dicht an einem Gegenelement anliegt. Es ist keine weitere separate Dichtstelle notwendig, insbesondere ist eine weitere Dichtung durch Anschäumen oder dgl. nicht notwendig, da das Sekundärelement einseitig geschlossen ist. Durch die Fixierung an dem Stützrohr ist im Montagefall ferner eine eindeutige Endlage des Sekundärelements im Filtersystem gegeben.

Das Sekundärelement kann bei bestimmungsgemäßem Gebrauch auf der Reinseite des primären Filterelements angeordnet sein. Das Sekundärelement, das auf dem Stützrohr angebracht ist und das ein durchlässiges Filtermedium, beispielsweise ein Vlies, umfassen kann, hat die Aufgabe, bei einem Austausch des Filterelements den Auslass des Filtersystems weiterhin verschlossen zu halten, so dass kein Schmutz in diesen Bereich eindringen kann, während das Filterelement gereinigt oder erneuert wird. Das Sekundärelement selbst umfasst also kein Stützrohr, sondern besteht aus dem Filtermedium, das beispielsweise relativ starr ist und auf das Stützrohr des Filtersystems aufgeschoben wird.

Nach einer günstigen Ausgestaltung kann das Sekundärelement mit seinem offenen Ende in eine Nut eingreifen, die koaxial zum Auslassstutzen und/oder zum Stützrohr angeordnet ist. Das offene Ende kann dicht an einer Nutwand anliegen. Dadurch ist es möglich, eine ausreichende Dichteigenschaft des Sekundärelements zu erreichen. Vorteilhaft ist die Dichtstelle als Kammer ausgeführt, was die Dichteigenschaften auf einfache Weise verbessert.

Nach einer günstigen Ausgestaltung können die zueinander komplementären Verbindungsmittel zerstörungsfrei lösbar ausgebildet sein. Dadurch ist einerseits eine Sicherung des Sekundärelements bei einem Wechsel des primären Filterelements gegeben, andererseits ist ein Wechsel des Sekundärelements einfach zu bewerkstelligen.

Nach einer günstigen Ausgestaltung kann das Stützrohr konisch ausgebildet sein und sich im Durchmesser vom Auslassstutzen weg entlang der Längsachse verjüngen. Hierdurch ist ein einfaches Aufschieben des Sekundärelements auf das Stützrohr möglich.

Nach einer günstigen Ausgestaltung kann das Sekundärelement das Stützrohr am geschlossenen Ende axial überragen. Damit lassen sich leicht Toleranzen ausgleichen und eine sichere Abdichtung des Sekundärelements an seinem offenen Ende erreichen, indem dieses sicher in seine Dichtnut geführt werden kann.

Nach einer günstigen Ausgestaltung kann das Filterelement an seinem auslassstutzenseitigen Ende radial nach innen abdichten. Dazu kann am Boden des Gehäuses eine geeignete Dichtfläche vorgesehen sein, die werkzeugtechnisch günstig herstellbar ist.

Nach einer günstigen Ausgestaltung kann das Stützrohr des Filtersystems an seinem Ende, an dem das Verbindungsmittel angeordnet ist, eine Vertiefung aufweisen, die formkonform mit einer Vertiefung des Sekundärelements ausgebildet sein kann. Vorteilhaft ist die Vertiefung trichterförmig ausgebildet. Dies ermöglicht eine Selbstjustage der Verbindung und erleichtert die Zusammenführung von Sekundärelement und Stützrohr.

Zweckmäßigerweise kann das Filtersystem als Luftfilter, insbesondere als Luftfilter einer Brennkraftmaschine verwendet werden. Der sichere Betrieb von Brennkraftmaschinen beruht auch auf einer sicheren und günstigen Filterung der Ansaugluft für den Verbrennungsbetrieb. Das beschriebene Filterelement stellt dafür eine wirtschaftliche Möglichkeit dar.

Vorteilhaft ist ebenso die Verwendung des Filtersystems als Partikelfilter, insbesondere als Partikelfilter einer Brennkraftmaschine. Auch hier sind die sichere Montage und wirtschaftliche Austauschbarkeit des beschriebenen Filterelements von entscheidender Bedeutung.

Günstigerweise kann das Sekundärelement beim Wechsel des Filterelements im Gehäuse verbleiben. Dadurch ist gewährleistet, dass die Reinseite des Auslassstutzens vor eindringenden Schmutzpartikeln auch wirksam geschützt ist.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen beispielhaft:
- Fig. 1: einen Längsschnitt durch ein zum Verständnis der Erfindung hilfreiches Filtersystem mit einem primären Filterelement, das auf seiner Reinseite ein Sekundärelement umgibt, nach einem Ausführungsbeispiel der Erfindung;
- Fig. 2: ein Detail des Bodenbereichs des Filtersystems aus Figur 1 in Schnittdarstellung;
- Fig. 3: einen Längsschnitt durch einen Teil des Filtersystems aus Figur 1 mit teilweise auf ein gehäusefestes Stützrohr aufgeschobenem Sekundärelement;
- Fig. 4: ein Detail einer zum Verständnis der Erfindung hilfreichen Verbindung zwischen Sekundärelement und Stützrohr in Schnittdarstellung;
- Fig. 5: einen Längsschnitt durch ein Filtersystem mit einem primären Filterelement, das auf seiner Reinseite ein Sekundärelement umgibt, nach einem Ausführungsbeispiel der Erfindung;
- Fig. 6: einen weiteren Längsschnitt des Ausführungsbeispiels nach Figur 5;
- Fig. 7: eine Explosionsdarstellung des Ausführungsbeispiels nach Figur 5;
- Fig. 8: einen Längsschnitt durch das Filtersystem nach Figur 5 vor dem Verbinden von Stützrohr und Sekundärelement; und
- Fig. 9: einen Längsschnitt durch das Filtersystem nach Figur 5 nach dem Verbinden von Stützrohr und Sekundärelement.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

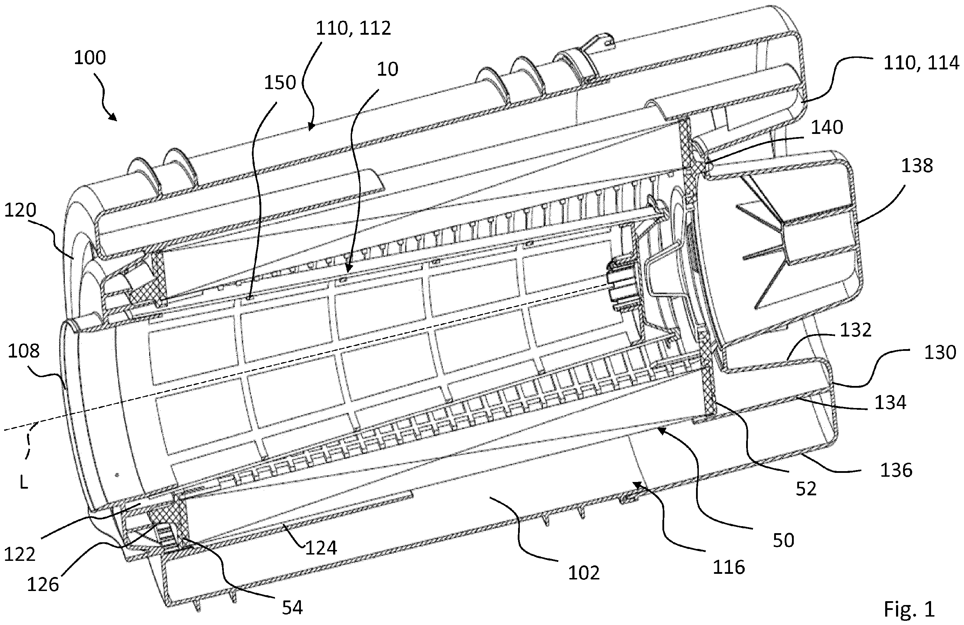

Figur 1 zeigt einen Längsschnitt durch ein Filtersystem 100 mit einem primären Filterelement 50, das auf seiner Reinseite ein Sekundärelement 10 umgibt, nach einem zum Verständnis der Erfindung hilfreichen Beispiel.

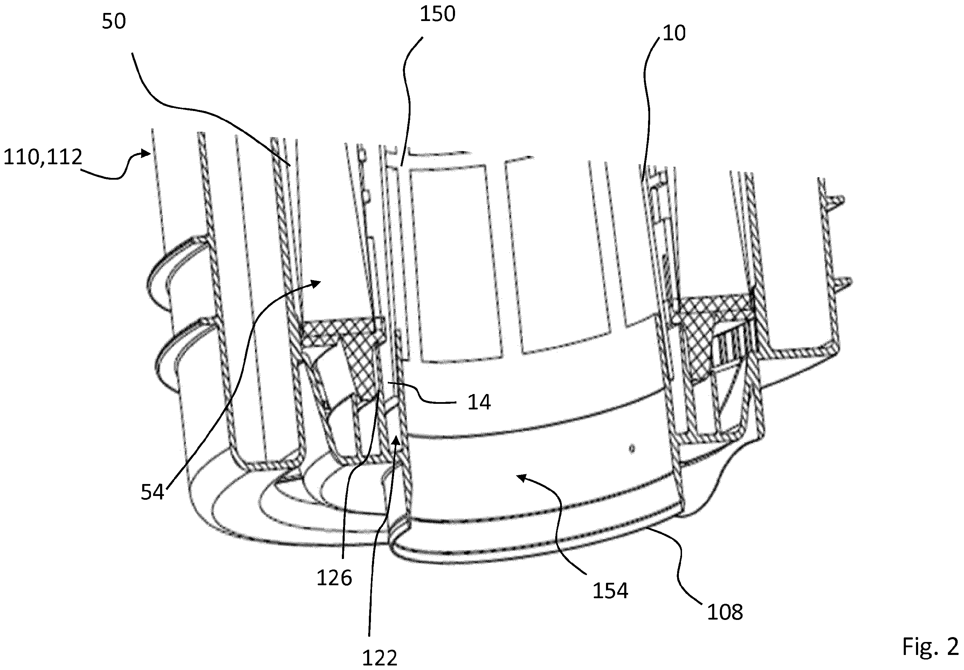

Das Filtersystem 100 umfasst ein Gehäuse 110, das aus einem Topf 112 und einem abnehmbaren Deckel 114 besteht. Figur 2 zeigt Details des Bodenbereichs des Gehäuses 110.

Das Gehäuse 110 kann z.B. zylindrisch ausgebildet sein. Am Gehäuse 110 ist ein in der Zeichnung nicht erkennbarer Einlassstutzen zum Zuführen eines zu filternden Fluids, insbesondere Luft, angeordnet. Der Einlassstutzen kann radial oder tangential am Gehäuse 110 angeordnet sein. Die axiale Position ist nahe des Bodens 120 des Gehäuses 110 in einem Bereich, bei dem ein Anströmschutz 124 im Inneren des Gehäuses 110 vorgesehen ist.

Am Gehäuse 110 ist ein Auslassstutzen 108 zur Ableitung des gefilterten Fluids angeordnet, der in Längsrichtung L zentral platziert ist. Im Strömungsweg zwischen Einlassstutzen und Auslassstutzen 108 ist ein zylindrisches Filterelement 50 sowie ein entlang der Gehäuseachse L angeordnetes Stützrohr 150 zur Aufnahme eines Filterelements 50 angeordnet. Das Filterelement 50 dient als primäres Element und weist an einem Ende 52 eine geschlossene Endscheibe und am gegenüberliegenden, auslassstutzenseitigen Ende 54 eine offene Endscheibe auf. Beide Endscheiben weisen axial nach außen abstehende Abstandselemente auf, mit denen das Filterelement 50 zwischen Boden 120 und Deckel 114 verspannt ist. Die Endscheiben können z.B. aus Polyurethan gebildet sein.

Der Deckel 114 kann am offenen Ende 116 des Topfs 112 verschraubt oder mit Spannelementen oder dgl. befestigt sein. Der Deckel 114 weist radial außen eine Wulst 130 mit einer äußeren Wulstwand 136 und einer inneren Wulstwand 132 auf, wobei die Wulst 130 ein zentrales Mittelteil 138 des Deckels 114 umgibt. Der Boden 140 einer Nut zwischen Wulst 130 und Mittelteil 138 drückt auf die Abstandselemente der geschlossenen Endscheibe des Filterelements 50. Die äußere Wulstwand 136 der Wulst 130 ist Teil der Außenwand des Deckels 114. Ein innerer Schenkel 134 ragt über die geschlossene Endscheibe des Filterelements 50 und bildet mit seiner radialen Innenfläche eine Dichtfläche für das Filterelement 50.

Wie in Figur 2 im Detail zu sehen ist, dichtet die offene Endscheibe am auslassstutzenseitigen Ende 54 des Filterelements 50 radial nach innen gegen einen Ring 126 am Boden 120 des Gehäuses ab.

An den Auslassstutzen 108 schließt sich in das Gehäuseinnere das Stützrohr 150 an, welches von dem Filterelement 50 umgeben ist. Das Stützrohr 150 ist fest mit dem Boden 120 des Gehäuses 110 verbunden, z.B. verschweißt.

Das Stützrohr 150 ist als Träger eines Sekundärelements 10 vorgesehen, wobei das Sekundärelement 10 und das Stützrohr 150 jeweils zueinander komplementäre Verbindungmittel 22, 156 aufweisen, mit denen sie an ihren Enden 12, 152 miteinander verbindbar sind, welche zum jeweiligen auslassstutzenseitigen Ende 14, 154 entgegengesetzt ist.

Das Sekundärelement 10 greift mit seinem offenen Ende 14 in eine Nut 122 ein, die koaxial zum Auslassstutzen 108 und zum Stützrohr 150 angeordnet ist. Dies bildet die als Kammer ausgebildete Dichtstelle des Sekundärelements 10. Die Nut 122 schließt sich radial nach innen an den Ring 126 an, an dem das Filterelement 50 mit seiner offenen Endscheibe radial abdichtet.

Rohluft strömt durch einen Ringkanal 102 zum Filterelement 50 und tritt auf dessen Reinseite in das Sekundärelement 10 ein und strömt von dort durch den Auslassstutzen 108 aus dem Gehäuse 110.

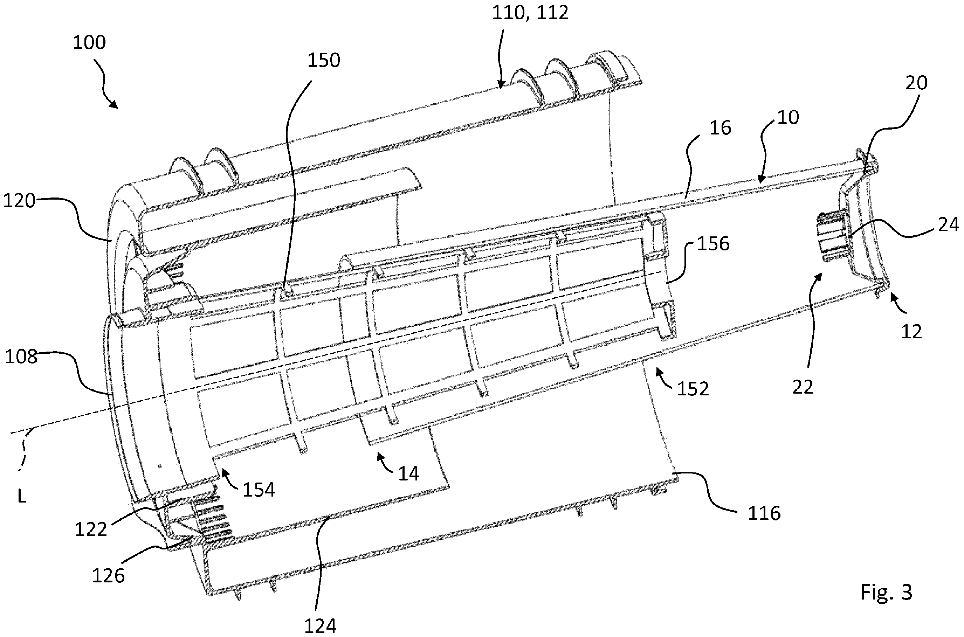

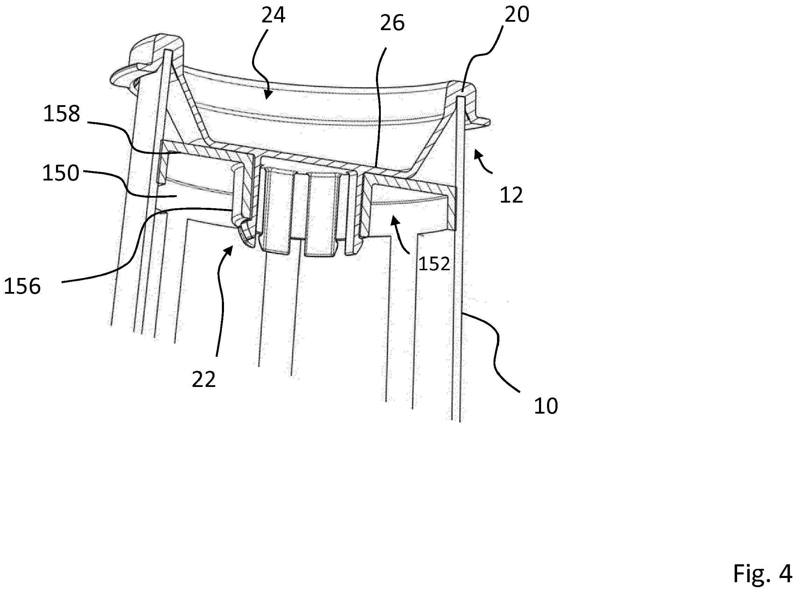

Figur 3 zeigt einen Längsschnitt durch einen Teil des Filtersystems 100 aus Figur 1 mit teilweise auf das gehäusefeste Stützrohr 150 aufgeschobenem Sekundärelement 10. Figur 4 zeigt ein Detail der Verbindung zwischen Sekundärelement 10 und Stützrohr 150 in Schnittdarstellung.

Das Sekundärelement 10 erstreckt sich entlang der Längsachse L zwischen zwei gegenüberliegenden Enden 12, 14 und umfasst ein um die Längsachse L angeordnetes Filtermedium 16, wobei eines der Enden 14 offen ist und das gegenüberliegende Ende 12 mit einer geschlossenen Endscheibe 20 dicht abgeschlossen ist. Das Stützrohr 150 ist am entsprechenden Ende 152 offen. Am offenen Ende ist eine Ringscheibe 158 angeordnet, durch deren zentrale Öffnung die Verbindungsmittel 22 des Sekundärelements 10 durchgreifen können.

Das Filtermedium 16 kann aus einem Vlies oder aus Papier oder Zellulose oder aus einer Mischfaser aus Kunststoff und Zellulose gebildet sein.

Die Endscheibe 20 weist ein Verbindungsmittel 22 auf, das mit einem komplementären Verbindungsmittel 156 eines Stützrohrs 150 des Filtersystems 100 zusammenwirkt, um das Sekundärelement 10 auf dem Stützrohr 150 zu fixieren. Im dargestellten Ausführungsbeispiel umfasst das Verbindungsmittel 22 Rasthaken an der Endscheibe 11 des Sekundärelements 10, die an einem Stutzen festhaken können, welcher das Verbindungsmittel 156 des Stützrohrs 150 bildet. Die Verbindungsmittel 22, 156 sind zerstörungsfrei lösbar ausgebildet, so dass das Sekundärelement 10 zwar bei einem Wechsel des Filterelements 50 (Figur 1) auf dem Stützrohr 150 gesichert ist, jedoch bei Bedarf auch gewechselt werden kann.

Das Stützrohr 150 und das Sekundärelement 10 sind konisch ausgebildet und verjüngen sich im Durchmesser vom Auslassstutzen 108 weg entlang der Längsachse L. Das Sekundärelement 10 wird über das Stützrohr 105 geschoben, bis das offene Ende 14 des Sekundärelements in die Nut 122 am Boden 120 des Gehäuses 110 eingreift und die Verbindungsmittel 22, 156 von Sekundärelement 10 und Stützrohr 150 in Verbindung kommen.

Dadurch, dass die Endscheibe 20 des Sekundärelements 10 eine in das Sekundärelement 10 ragende Vertiefung 24 aufweist, überragt das Sekundärelement 10 das Stützrohr 150 am geschlossenen Ende 12 axial. Sind die Verbindungsmittel 22, 156 im vorgesehenen Kontakt, liegt der Boden der Vertiefung 24 der Endscheibe 20 des Sekundärelements 10 auf der Ringscheibe 158 des Stützrohrs 150 auf und bildet eine definierte Endlage des Sekundärelements 10 bei der Montage. Durch die definierte Endlage kann die richtige Montage des Sekundärelements 10 erleichtert werden. Die Vertiefung 24 ist trichterförmig ausgebildet und weist einen ebenen Boden 26 auf. Die Verbindungsmittel 22 sind radial innerhalb des Bodens 26 in einem Radius angeordnet, der deutlich kleiner ist als der Außenumfang des Bodens 26.

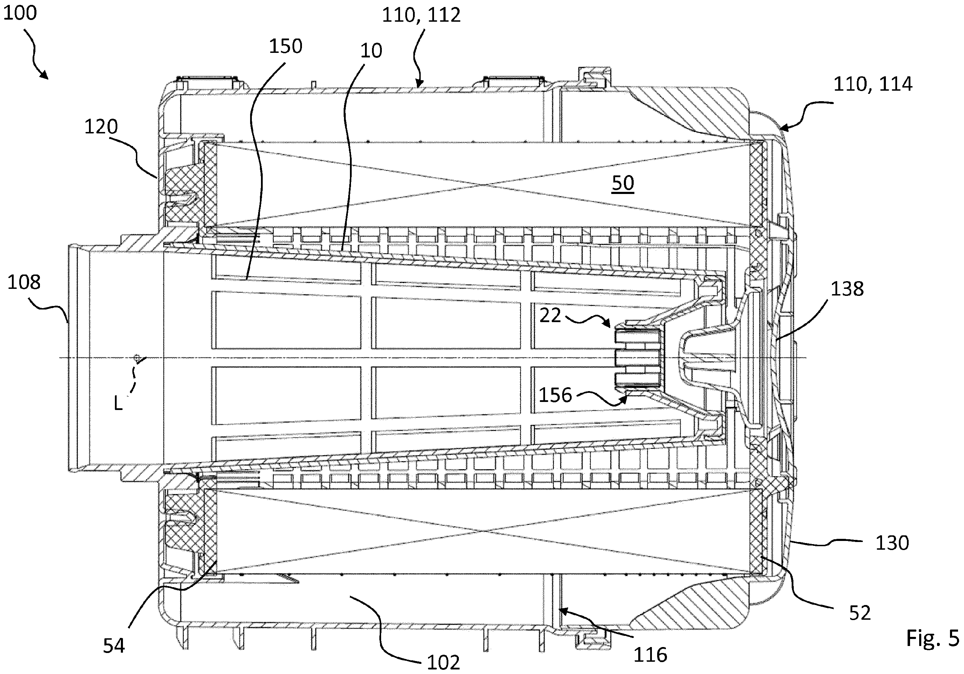

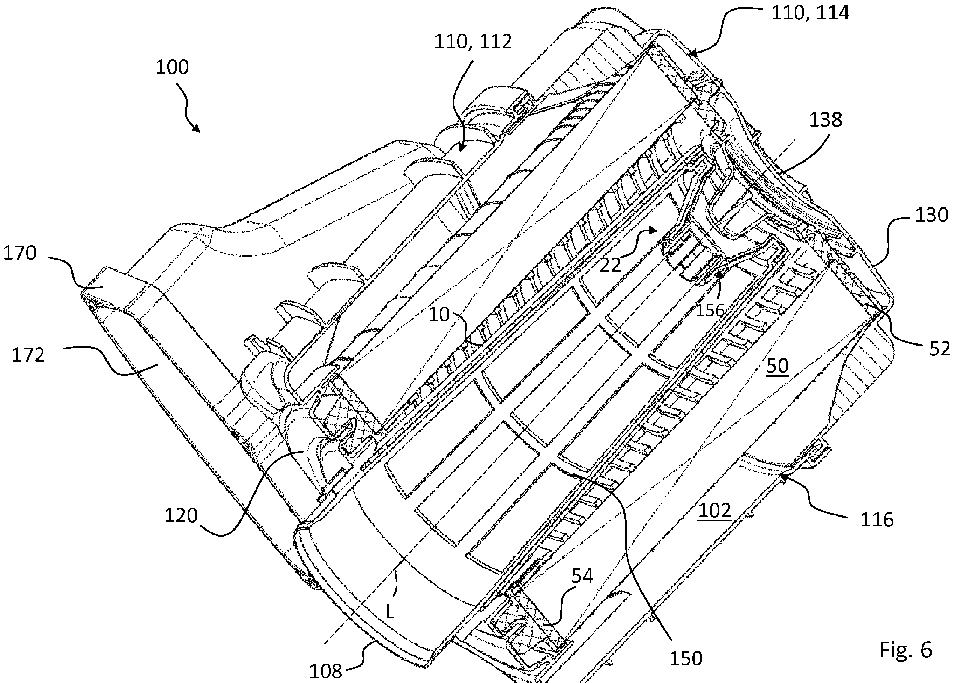

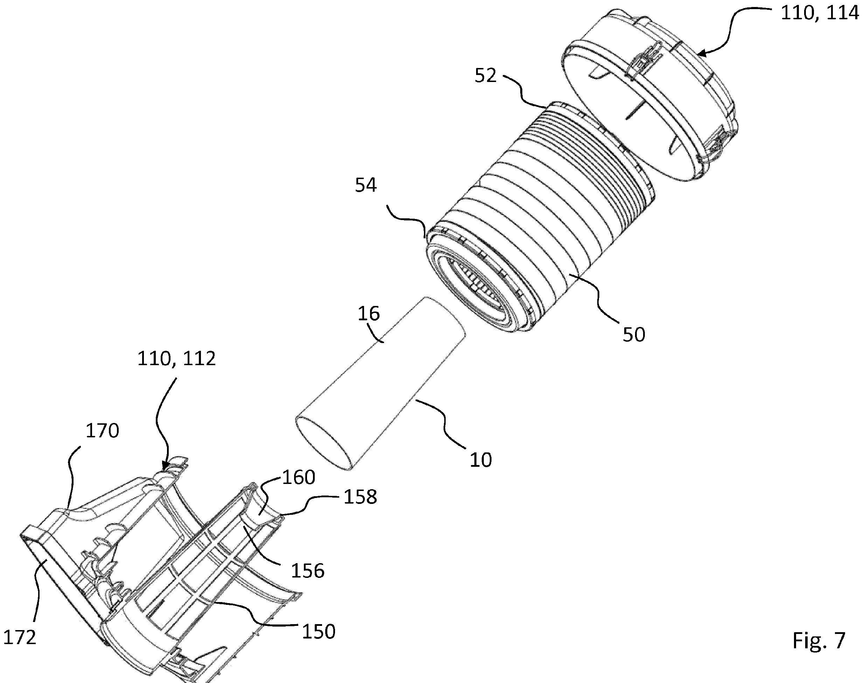

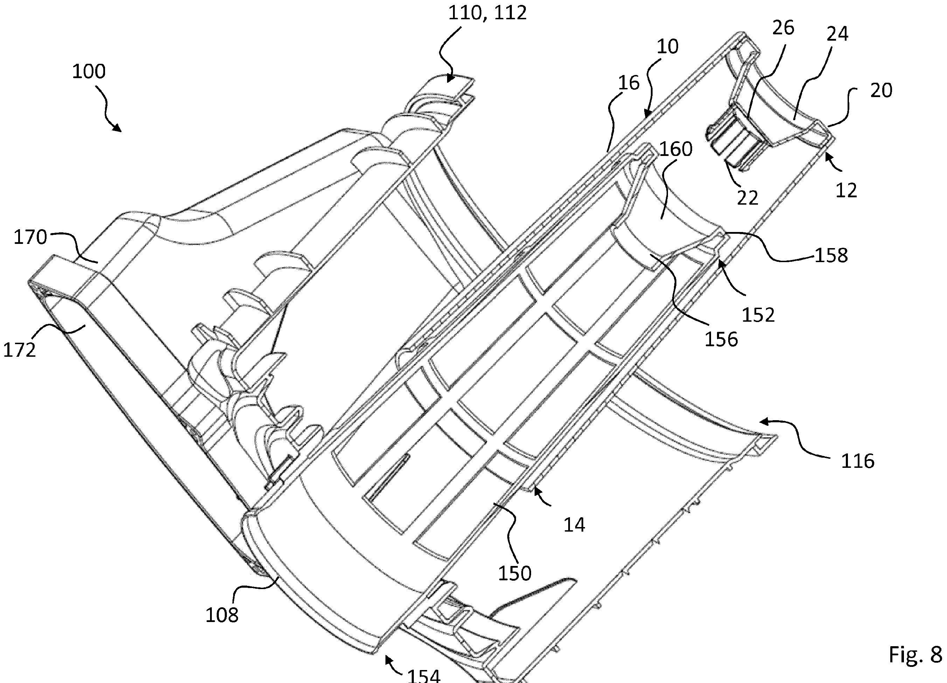

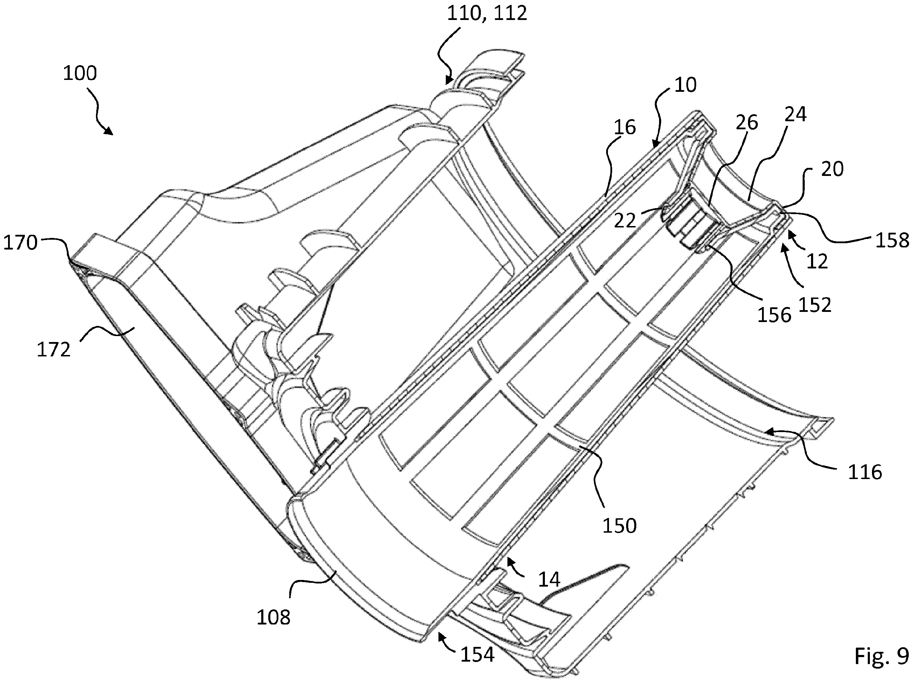

Figuren 5 bis 9 zeigen ein Ausführungsbeispiel der Erfindung. Figur 5 zeigt einen Längsschnitt durch ein Filtersystem 100 mit einem primären Filterelement 50, das auf seiner Reinseite ein Sekundärelement 10 umgibt, nach einem Ausführungsbeispiel der Erfindung. Figur 6 zeigt einen weiteren Längsschnitt des Ausführungsbeispiels nach Figur 5, Figur 7 zeigt eine Explosionsdarstellung des Ausführungsbeispiels nach Figur 5, Figur 8 zeigt einen Längsschnitt durch das Filtersystem 100 nach Figur 5 vor dem Verbinden von Stützrohr 150 und Sekundärelement 10, und Figur 9 zeigt einen Längsschnitt durch das Filtersystem 100 nach Figur 5 nach dem Verbinden von Stützrohr 150 und Sekundärelement 10. Viele Elemente stimmen mit den vorstehend beschriebenen Ausgestaltungen überein, so dass zur Vermeidung unnötiger Wiederholungen im Wesentlichen nur auf Unterschiede in den Ausführungsbeispielen eingegangen wird.

Das Filtersystem 100 weist am Topf 112 seines Gehäuses 110 einen seitlichen Ansatz 170 mit einer in axialer Richtung offenen Ansaugöffnung 172 auf, durch welche das zu filternde Fluids, insbesondere Luft, in das Filtersystem 100 eintreten kann. ein besonderer Anströmschutz für das Primärelement 50 kann daher entfallen.

Die Schnittstelle zwischen Sekundärelement 10 und Stützrohr 150 ist in dieser Ausgestaltung formkomplementär ausgebildet. Die Vertiefung 24 des Sekundärelements 10 ist trichterförmig ausgebildet, jedoch tiefer als im Ausführungsbeispiel der Figuren 1 bis 4. Der Außendurchmesser des ebenen Bodens 26 der Vertiefung 24 ist nur geringfügig größer als der Radius der beispielhaft als Rasthaken ausgebildeten Verbindungselemente 22.

Das Stützrohr 150 weist eine zur Vertiefung 24 formkomplementäre Vertiefung 160 auf, was das Einführen der Verbindungselemente 22 in das Stützrohr 150 erleichtert.

## Patentansprüche

1. Luftfiltersystem (100) für eine Brennkraftmaschine umfassend
- ein Gehäuse (110),
- einen am Gehäuse (110) angeordneten Einlassstutzen zum Zuführen eines zu filternden Fluids, insbesondere Luft,
- einen am Gehäuse (110) angeordneten Auslassstutzen (108) zur Ableitung des gefilterten Fluids, insbesondere ein in Längsrichtung (L) zentral angeordneter Auslassstutzen (108),
- wenigstens ein Filterelement (50), das zwischen Einlassstutzen und Auslassstutzen (108) angeordnet ist,
- ein im Inneren des Gehäuses (110) entlang einer Gehäuseachse (L) angeordnetes Stützrohr (150) zur Aufnahme eines Filterelements (50),
- ein Sekundärelement (10) mit einer Längsachse (L) und zwei sich gegenüber liegenden Enden (12, 14), umfassend ein um die Längsachse (L) angeordnetes Filtermedium (16), wobei eines der Enden (14) offen ist und das gegenüberliegende Ende (12) mit einer geschlossenen Endscheibe (20) dicht abgeschlossen ist und die Endscheibe (20) ein Verbindungsmittel (22) aufweist, das bei bestimmungsgemäßer Montage zum Zusammenwirken mit einem Verbindungsmittel (156) des Stützrohrs (150) vorgesehen ist, um das Sekundärelement (10) auf dem Stützrohr (150) zu fixieren,
wobei das Stützrohr (150) als Träger des Sekundärelements (10) vorgesehen ist, wobei das Sekundärelement (10) und das Stützrohr (150) jeweils zueinander komplementäre Verbindungmittel (22, 156) aufweisen, mit denen sie an einer ihrer Stirnseiten (12, 152) miteinander verbindbar sind, wobei das Verbindungsmittel (22) als Teil einer Rastverbindung Rasthaken an der Endscheibe (11) des Sekundärelements (10) umfasst, welche sich an dem stützrohrseitigen Verbindungselement (156) zur Fixierung festhaken und wobei die Endscheibe (20) eine Vertiefung (24) aufweist, die in das Innere des Sekundärelements (10) ragt und die Rasthaken (22) von einem Boden (26) der Vertiefung (24) weiter in das Innere des Sekundärelements (10) ragen, wobei das Stützrohr (150) an seinem Ende (152), an dem das Verbindungsmittel (156) angeordnet ist, eine Vertiefung (160) aufweist, die formkonform mit einer Vertiefung (24) des Sekundärelements (10) ausgebildet ist.

2. Luftfiltersystem nach Anspruch 1, wobei das Sekundärelement (10) mit seinem offenen Ende (12) in eine Nut (122) eingreift, die koaxial zum Auslassstutzen (108) und/oder zum Stützrohr (150) angeordnet ist.

3. Luftfiltersystemnach Anspruch 1 oder 2, wobei die zueinander komplementären Verbindungsmittel (22, 156) zerstörungsfrei lösbar ausgebildet sind.

4. Luftfiltersystem nach Anspruch 1 bis 3, wobei das Stützrohr (150) konisch ausgebildet ist und sich im Durchmesser vom Auslassstutzen (108) weg entlang der Längsachse (L) verjüngt.

5. Luftfiltersystem nach Anspruch 1 bis 4, wobei das Sekundärelement (10) das Stützrohr (150) am geschlossenen Ende (12) axial überragt.

6. Luftfiltersystem nach Anspruch 1 bis 5, wobei das Filterelement (50) an seinem auslassstutzenseitigen Ende (54) radial nach innen abdichtet.

7. Verfahren zum Konfigurieren eines Sekundärelements (10) zur Verwendung als Sekundärelement (10) in dem Luftfiltersystem nach einem der vorhergehenden Ansprüche, das Sekundärelement (10) mit einer Längsachse (L) und zwei sich gegenüber liegenden Enden (12, 14), wobei um die Längsachse (L) ein Filtermedium (16) angeordnet wird, wobei eines der Enden (14) offen ist und das gegenüberliegende Ende (12) mit einer geschlossenen Endscheibe (20) dicht abgeschlossen ist und die Endscheibe (20) ein Verbindungsmittel (22) aufweist, das bei bestimmungsgemäßer Montage zum Zusammenwirken mit dem Verbindungsmittel (156) des Stützrohrs (150) des Filtersystems (100) vorgesehen ist, um das Sekundärelement (10) auf dem Stützrohr (150) zu fixieren, wobei das Verbindungsmittel (22) als Teil einer Rastverbindung Rasthaken an der Endscheibe (11) des Sekundärelements (10), konfiguriert zum Festhaken an dem stützrohrseitigen Verbindungselement (156), umfasst, und wobei die Endscheibe (20) eine Vertiefung (24) aufweist, die in das Innere des Sekundärelements (10) ragt und die Rasthaken (22) von einem Boden (26) der Vertiefung (24) weiter in das Innere des Sekundärelements (10) ragen, wobei die Vertiefung (24) des Sekundärelements (10) formkonform mit der Vertiefung (160) am Ende des Stützrohrs (150) ausgebildet ist.

8. Verfahren nach Anspruch 7, wobei die Endscheibe (20) mit dem Filtermedium (16) fest verbunden ist, insbesondere verschweißt oder verklebt oder angespritzt ist.

9. Verfahren nach einem der vorhergehenden Ansprüche 7 bis 8, wobei sich dessen Durchmesser vom offenen Ende (14) zum geschlossenen Ende (12) verjüngt.

10. Verfahren nach einem der vorhergehenden Ansprüche 7 bis 9, wobei das Filtermedium (16) aus einem Vlies oder aus Papier oder aus Zellulose oder aus einer Mischfaser aus Kunststoff und Zellulose gebildet ist.

11. Verfahren nach einem der vorhergehenden Ansprüche 7 bis 10, wobei die Vertiefung (24) trichterförmig ausgebildet ist.

## Claims

1. Air filter system (100) for an internal combustion engine,
comprising
- a housing (110),
- an inlet port disposed on the housing (110) for supplying a fluid to be filtered, in particular air,
- an outlet port (108) disposed on the housing (110) for discharging the filtered fluid, in particular an outlet port (108) disposed centrally in the longitudinal direction (L),
- at least one filter element (50) disposed between inlet port and outlet port (108),
- a support tube (150) disposed inside the housing (110) along a housing axis (L) for accommodating a filter element (50),
- a secondary element (10) with a longitudinal axis (L) and two oppositely positioned ends (12, 14), comprising a filter medium (16) disposed around the longitudinal axis (L), wherein one of the ends (14) is open and the oppositely positioned end (12) is tightly sealed by means of a closed end disc (20) and the end disc (20) features a connecting means (22) provided for interacting with a connecting means (156) of the support tube (150) if mounted as intended, in order to fix the secondary element (10) on the support tube (150).
wherein the support tube (150) is provided as a support of the secondary element (10), wherein the secondary element (10) and the support tube (150) each feature connecting means (22, 156) complementary to each other, and with which they can be connected to each other on one of their front faces (12, 152), wherein the connecting means (22) comprises, as part of a snap-fit connection, snap-fit hooks at the end disc (11) of the secondary element (10) which hook onto the connecting element (156) on the support tube side for fixing purposes and wherein the end disc (20) features a recess (24) projecting into the interior of the secondary element (10) and the snap-fit hooks (22) project from a bottom (26) of the recess (24) further into the interior of the secondary element (10), wherein the support tube (150) features at its end (152), at which the connecting element (156) is disposed, a recess (160) formed in conformity with a recess (24) of the secondary element (10).

2. Air filter system according to claim 1, wherein the secondary element (10) engages with its open end (12) into a groove (122) disposed coaxially in relation to the outlet port (108) and/or the support tube (150).

3. Air filter system according to claim 1 or 2, wherein the connecting means (22, 156) complementary to each other are designed in a non-destructive manner.

4. Air filter system according to claim 1 to 3, wherein the support tube (150) has a conical shape and tapers in diameter away from the outlet port (108) along the longitudinal axis (L).

5. Air filter system according to claim 1 to 4, wherein the secondary element (10) projects axially beyond the support tube (150) at the closed end (12).

6. Air filter system according to claim 1 to 5, wherein the filter element (50) seals radially inwardly at its ends (54) on the outlet port side.

7. Method for configuring a secondary element (10) for being used as secondary element (10) in the air filter system according to one of the preceding claims, the secondary element (10) with a longitudinal axis (L) and two oppositely positioned ends (12, 14), wherein a filter media (16) is disposed around the longitudinal axis (L), wherein one of the ends (14) is open and the oppositely positioned end (12) is tightly sealed by means of a closed end disc (20) and the end disc (20) features a connecting means (22) provided for interacting with the connecting means (156) of the support tube (150) of the filter system (100) if mounted as intended, in order to fix the secondary element (10) on the support tube (150), wherein the connecting means (22) comprises, as part of a snap-fit connection, snap-fit hooks at the end disc (11) of the secondary element (10) configured to hook onto the connecting element (156) on the support tube side, and wherein the end disc (20) features a recess (24) projecting into the interior of the secondary element (10) and the snap-fit hooks (22) project from a bottom (26) of the recess (24) further into the interior of the secondary element (10), wherein the recess (24) of the secondary element (10) is formed in conformity with the recess (160) at the end of the support tube (150).

8. Method according to claim 7, wherein the end disc (20) is firmly connected to the filter medium (16), in particular welded or glued or injection-molded.

9. Method according to one of the preceding claims 7 to 8, wherein its diameter tapers from the open end (14) towards the closed end (12).

10. Method according to one of the preceding claims 7 to 9, wherein the filter medium (16) is made of non-woven fabric or of paper or of cellulose or of mixed fiber made of synthetic material and cellulose.

11. Method according to one of the preceding claims 7 to 10, wherein the recess (24) is funnel-shaped.

## Revendications

1. Système de filtre à air (100) pour un moteur à combustion interne, comprenant
- un boîtier (110),
- une tubulure d'admission disposée sur le boîtier (110) et destinée à introduire un fluide à filtrer, notamment de l'air,
- une tubulure d'évacuation (108) disposée sur le boîtier (110) et destinée à évacuer le fluide filtré, notamment une tubulure d'évacuation (108) disposée de manière centrale en sens longitudinal (L),
- au moins un élément filtrant (50) disposé entre la tubulure d'admission et la tubulure d'évacuation (108),
- un tube de support (150) disposé à l'intérieur du boîtier (110) le long d'un axe de boîtier (L) pour recevoir un élément filtrant (50),
- un élément secondaire (10) avec un axe longitudinal (L) et deux extrémités (12, 14) faisant face l'un à l'autre, comprenant un milieu filtrant (16) disposé autour de l'axe longitudinal (L), dans lequel l'une des extrémités (14) est ouverte et l'extrémité opposée (12) est fermée de manière étanche avec un disque d'extrémité (20) fermé et le disque d'extrémité (20) présente un moyen de liaison (22) prévu pour coopérer avec un moyen de liaison (156) du tube de support (150) lors d'un montage conforme à l'utilisation pour fixer l'élément secondaire (10) sur le tube de support (150),
dans lequel le tube de support (150) est prévu en tant que support de l'élément secondaire (10), dans lequel l'élément secondaire (10) et le tube de support (150) présentent chacun des moyens de liaison (22, 156) complémentaires l'un par rapport à l'autre, et par lesquels ils peuvent être raccordés l'un à l'autre au niveau de l'une de leur faces frontales (12, 152), dans lequel le moyen de liaison (22) comprend, en tant que partie d'une liaison par encliquetage, des crochets d'encliquetage sur le disque d'extrémité (11) de l'élément secondaire (10) qui s'accrochent pour la fixation à l'élément de raccordement (156) côté tube de support et dans lequel le disque d'extrémité (20) présente un creux (24) faisant saillie à l'intérieur de l'élément secondaire (10) et les crochets d'encliquetage (22) font saillie à partir d'un fond (26) du creux (24) plus loin à l'intérieur de l'élément secondaire (10), dans lequel le tube de support (150) présente à son extrémité (152), sur lequel est disposé le moyen de liaison (156), un creux (160) conçu de manière à correspondre à la forme d'un creux (24) de l'élément secondaire (10).

2. Système de filtre à air selon la revendication 1, dans lequel l'élément secondaire (10) s'engrène avec son extrémité ouverte (12) dans une rainure (122) disposée de manière coaxiale par rapport à la tubulure d'évacuation (108) et/ou au tube de support (150).

3. Système de filtre à air selon la revendication 1 ou 2, dans lequel les moyens de liaison (22, 156) complémentaires l'un par rapport à l'autre sont détachables de manière non destructive.

4. Système de filtre à air selon la revendication 1 à 3, dans lequel le tube de support (150) est exécuté de manière conique et son diamètre se rétréci en s'éloignant de la tubulure d'évacuation (108) le long de l'axe longitudinal (L).

5. Système de filtre à air selon la revendication 1 à 4, dans lequel l'élément secondaire (10) dépasse axialement le tube de support (150) à l'extrémité fermée (12).

6. Système de filtre à air selon la revendication 1 à 5, dans lequel l'élément filtrant (50) étanche en sens radial vers l'intérieur à son extrémité (54) côté tubulure d'évacuation.

7. Procédé pour configurer un élément secondaire (10) pour l'utiliser en tant qu'élément secondaire (10) dans le système de filtre à air selon l'une quelconque des revendications précédentes, l'élément secondaire (10) avec un axe longitudinal (L) et deux extrémités (12, 14) faisant face l'une à l'autre, dans lequel un milieu filtrant (16) est disposé autour de l'axe longitudinal (L), dans lequel l'une des extrémités (14) est ouverte et l'extrémité opposée (12) est fermée de manière étanche avec un disque d'extrémité (20) et le disque d'extrémité (20) présente un moyen de liaison (22) prévu pour coopérer avec le moyen de liaison (156) du tube de support (150) du système de filtre (100) lors d'un montage conforme à l'utilisation pour fixer l'élément secondaire (10) sur le tube de support (150), dans lequel le moyen de liaison (22) comprend, en tant que partie d'une liaison par encliquetage, des crochets d'encliquetage sur le disque d'extrémité (11) de l'élément secondaire (10) configurés pour s'accrocher sur l'élément de raccordement (156) côté tube de support, et dans lequel le disque d'extrémité (20) présente un creux (24) faisant saillie à l'intérieur de l'élément secondaire (10) et les crochets d'encliquetage (22) font saillie à partir d'un fond (26) du creux (24) plus loin à l'intérieur de l'élément secondaire (10), dans lequel le creux (24) de l'élément secondaire (10) est conçu de manière à correspondre à la forme du creux (160) à l'extrémité du tube de support (150).

8. Procédé selon la revendication 7, dans lequel le disque d'extrémité (20) est relié de manière fixe, notamment soudé ou collé ou moulé par injection, au milieu filtrant (16).

9. Procédé selon l'une quelconque des revendications précédentes 7 à 8, dans lequel son diamètre se rétrécie de l'extrémité ouverte (14) vers l'extrémité fermée (12).

10. Procédé selon l'une des revendications précédentes 7 à 9, dans lequel le milieu filtrant (16) est réalisé d'un non-tissé ou de papier ou de cellulose ou d'une fibre composite constituée de matière plastique et de cellulose.

11. Procédé selon l'une quelconque des revendications précédentes 7 à 10, dans lequel le creux (24) est en forme d'entonnoir.
